# EUROPÄISCHE PATENTSCHRIFT

(11) **EP 2 477 878 B1**
(45) Veröffentlichungstag und Bekanntmachung des Hinweises auf die Patenterteilung: **03.01.2018**
(21) Anmeldenummer: 10776274.2
(22) Anmeldetag: 10.09.2010
(51) Int. Cl.: B62D 27/02, B62D 29/04, B29C 65/00, B60J 5/00

(54) **KAROSSERIEBAUTEIL, BESTEHEND AUS EINEM AUSSENHAUTBAUTEIL UND EINEM MIT DIESEM RÜCKSEITIG VERBUNDENEN AUS FASERVERSTÄRKTEN KUNSTSTOFF STRUKTURBAUTEIL.**
BODY PART COMPRISING AN OUTER SKIN AND A ANOTHER PART THEREWITH ASSEMBLED ON REAR SIDE OF IT AND WHICH IS MADE OF FIBER REINFORCED PLASTIC.
ÉLÉMENT DE CARROSSERIE COMPRENANT UNE PEAU EXTERNE ET UNE PARTIE LIEE A LA FACE ARRIÈRE DE LA PEAU, QUI EST REALISE EN PLASTIQUE RENFOCE DE FIBRES.

(30) Priorität: 15.09.2009 DE 202009012432 U
(43) Veröffentlichungstag der Anmeldung: 25.07.2012
(73) Patentinhaber: EDAG Werkzeug + Karosserie GmbH, 36039 Fulda (DE)
(72) Erfinder: SCHÄFER, Uwe, 36088 Hünfeld-Malges (DE)
(74) Vertreter: Weidner Stern Jeschke
(86) Internationale Anmeldenummer: PCT/DE2010/001068
(87) Internationale Veröffentlichungsnummer: WO 2011/032533

(56) Entgegenhaltungen:
- EP-A1- 0 307 600
- EP-A2- 0 339 493
- DE-A1- 2 934 430
- FR-A1- 2 937 609
- GB-A- 2 150 075
- US-A1- 2004 164 580
- US-A1- 2009 056 868

## Beschreibung

Die Erfindung betrifft ein Karosseriebauteil, insbesondere ein Anbauteil in Form einer Tür, Klappe, Haube oder Deckel nach dem Oberbegriff des Schutzanspruchs 1.

### Stand der Technik

Unter dem Gesichtspunkt der Reduzierung von Kraftstoffverbrauch und Schadstoffausstoß bilden an Fahrzeugkarosserien solche gattungsgemäßen Anbauteile schon lange einen Schwerpunkt der Anwendung des so genannten Leichtbauprinzips. Eine Besonderheit liegt bei solchen Anbauteilen darin, dass sie an der Grundstruktur der Karosserie beweglich angelenkt oder abnehmbar angeordnet sind. Aus diesem Grund müssen die Anbauteile selbst ausreichend steif und formstabil ausgebildet sein. Da sie in der Regel außen eine so genannte Class-A-Oberfläche aufweisen, beschränken sich die konstruktiven Maßnahmen zur Gewährleistung der Steifigkeit auf die rückseitige Anordnung von Strukturbauteilen. Dies sind dann Strukturbauteile vorwiegend aus Stahlblech, die unter Leichtbaugesichtspunkten, meistens durch mehrstufige Umformvorgänge, zum Beispiel Tiefziehen, gefertigt werden. Leichtbau bedeutet hier möglichst geringe Materialstärke in Verbindung mit gewichtssparenden Durchbrüchen und Steifigkeit bietender Querschnittsgestaltung.

Eine schweißtechnische Verbindung des Strukturbauteils mit der Außenhaut des Karosseriebauteils scheidet oft auf Grund der geforderten Oberflächenqualitäten aus. Daher erfolgt die Verbindung von Außenhautbauteil und Strukturbauteil meistens formschlüssig durch Bördeln, Rollfalzen sowie Kleben.

Zum Realisieren von Karosseriebauteilen mit Leichtbaueigenschaften werden insbesondere die die Bauteilsteifigkeit gewährleistenden inneren Strukturbauteile zunehmend aus faserverstärktem Kunststoff hergestellt. Das Herstellen von Strukturbauteilen nach dem Stand der Technik Durch zum Beispiel durch Verpressen von extrudierbaren Formmassen (siehe z.B. gattungsgemäße US 2004/164580 A1) oder durch das thermische Umformen von faserverstärklen Halbzeugen unter Anwendung von Fließpresstechnologien (US 2009/056868 A1 und EP 0 339 4 93 A2) erfordert in der Regel eine umfassende Umstellung der gesamten Fertigungstechnologie. Dies hat insbesondere Auswirkungen auf solche Prozesse wie Formgebung, Logistik, Handling und Fügen. Gleiches gilt für ein Bauteil nach EP 0 307 600 A1.

Unter anderem um die erforderliche Bauteilsteifigkeit zu gewährleisten, sind Kunststoffstrukturbauteile mit zufallsorientierter Faserverstärkung völlig anders zu gestalten und zu dimensionieren als die zu ersetzenden Strukturbauteile aus Blech.

### Aufgabenstellung

Es ist Aufgabe der Erfindung, bei gattungsgemäßen Karosseriebauteilen gegenüber dem Stand der Technik eine deutliche Gewichtsreduzierung zur erreichen, wobei die bisherigen Technologien zum Verbinden des Außenhautbauteils mit dem Strukturbauteil weiterhin anwendbar sein sollen.

Diese Aufgabe wird gelöst durch ein Karosseriebauteil bestehend aus einem Außenhautbauteil und einem mit diesem rückseitig verbundenen, die Bauteilsteifigkeit gewährleistenden Strukturbauteil und das Strukturbauteil aus einem thermisch umgeformten Organoblech besteht, wobei das Organoblech eine thermisch umformbare, kontinuierlich faserverstärkte Kunststoffplatine aufweist und das Strukturbauteil und das Außenhautbauteil durch Bördeln oder Rollfalzen miteinander verbunden sind. Vorteilhafte Ausgestaltungen der Erfindung sind in den Unteransprüchen angegeben.

Ein Vorteil der Erfindung besteht insbesondere darin, dass, gegenüber dem Einsatz eines Strukturbauteils aus umgeformten Stahlblech, bei der Herstellung des Strukturbauteils aus einer thermisch umformbaren, kontinuierlich faserverstärkten Kunststoffplatine, im Folgenden Organoblech genannt, eine Gewichtsreduzierung von bis zu 60 %, be-zogen auf das Strukturbauteil, erreicht werden kann. Die Festigkeit des Karosseriebauteils kann dabei sogar erhöht werden. Die Strukturbauteile aus thermisch umgeformten Organoblech ermöglichen weiterhin den Einsatz der bisher verwendeten Verbindungstechnologien, wie Bördeln, Rollfalzen, Kleben. Die aus Organoblech bestehenden Strukturbauteile erfordern an den selben keine Korrosionsschutzmaßnahmen mehr. Da keine Kontaktkorrosion zwischen Außenhautbauteil und Strukturbauteil mehr auftritt, kann zur weiteren Gewichtsreduzierung für das Außenhautbauteil Aluminium eingesetzt werden, ohne dass dazu spezielle und aufwändige Korrosionsschutzmaßnahmen notwendig sind.

Auch sind zur Herstellung des Strukturbauteils aus Organoblech keine mehrstufigen Umformvorgänge mehr erforderlich. Da beim thermischen Umformen des Organobleches kein Rückspringverhalten auftritt, kann die Werkzeugform der Bauteilform entsprechen, wodurch der Konstruktions- und Herstellungsaufwand für die Werkzeuge verringert werden kann. Auch sind keine diesbezüglichen Simulationen mehr nötig. Das Strukturbauteil besitzt ganzheitlich die gleiche Wandstärke. Eine partielle Wandverstärkung, zum Beispiel für die Befestigung von Anschraubteilen, ist durch das Einlegen von vorgefertigten Organoblechteilen oder aus anderen faserverstärkten Werkstoffen bestehenden Einlegteilen realisierbar, indem diese Teile vorgeheizt in das Umformwerkzeug mit eingelegt werden. Die Verbindung untereinander erfolgt dann durch Verschmelzen.

### Ausführungsbeispiel

Ein Ausführungsbeispiel der Erfindung wird im Folgenden näher beschrieben.

In den Figuren dargestellt ist die Erfindung an Hand eines Karosseriebauteils in Form einer Seitenklappe für LKW-Fahrerhäuser.

Es zeigen:

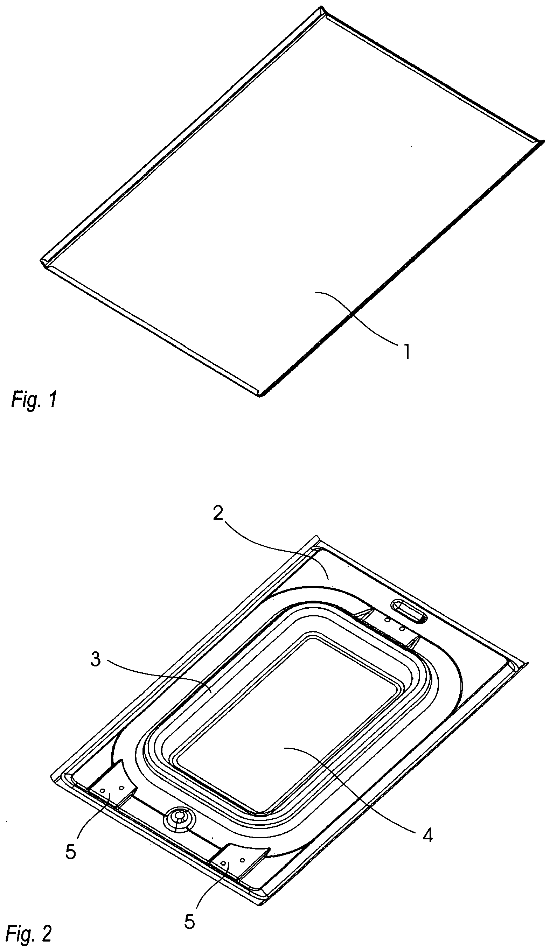

- Fig. 1: die Rückseite eines Außenhautbauteils
- Fig. 2: ein Strukturbauteil
- Fig. 3: ein zusammengefügtes Karosseriebauteil von hinten

Das Außenhautbauteil 1 weist einen zum Zwecke des Bördelns oder Rollfalzens ausgebildeten Rand auf. Das Strukturbauteil 2 besteht aus einem thermisch umgeformten Organoblech mit einer umlaufenden Versteifungsstruktur 3, wobei der von der Versteifungsstruktur 3 umschlossene, unverformte Teil des Organobleches, einen Durchbruch 4 bildend, herausgetrennt ist.

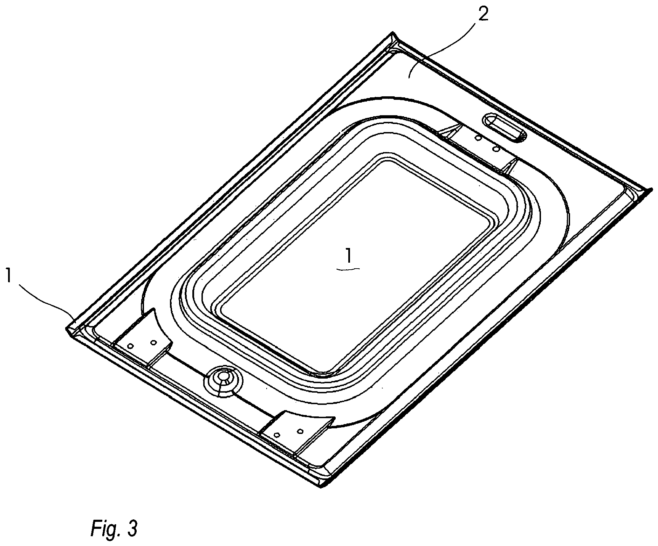

Das Außenhautbauteil 1 und das Strukturbauteil 2 sind durch geeignete Verbindungstechnologien, wie Bördeln, Rollfalzen und/oder Kleben, verbunden (Fig. 3).

Zum Befestigen von Scharnieren weist das Strukturbauteil 2 verstärkte Anschraubflächen 5 auf.

## Patentansprüche

1. Karosseriebauteil, bestehend aus einem Außenhautbauteil und einem mit diesem rückseitig verbundenen, die Bauteilsteifigkeit gewährleistenden Strukturbauteil, **dadurch gekennzeichnet, dass** das Strukturbauteil (2) aus einem thermisch umgeformten Organoblech besteht, wobei das Organoblech eine thermisch umformbare, kontinuierlich faserverstärkte Kunststoffplatine aufweist, wobei das Strukturbauteil (2) und das Außenhautbauteil (1) durch Bördeln oder Rollfalzen miteinander verbunden sind.

2. Karosseriebauteil nach Patentanspruch 1, **dadurch gekennzeichnet, dass** das Strukturbauteil (2) partielle Wandverstärkungen (5) aus übereinander gelegten und verschmolzenen kontinuierlich faserverstärkten Kunststoffplatinenteilen oder anderen aus faserverstärkten Werkstoffen bestehenden Einlegteilen aufweist.

3. Karosseriebauteil nach Patentanspruch 1 oder 2, **dadurch gekennzeichnet, dass** das Strukturbauteil (2) und das Außenhautbauteil (1) durch Kleben miteinander verbunden sind.

## Claims

1. A vehicle body component, consisting of a body shell component and a structural component joined with it on its rear side and ensuring the rigidity of the component,
**characterized in that**
the structural component (2) consists of a thermally shaped organic sheet, wherein the organic sheet comprises a thermally deformable, continuously fiber-reinforced plastic blank, wherein the structural component (2) and the body shell component (1) are joined with each other by flanging or roll hemming.

2. The vehicle body component according to claim 1, **characterized in that** the structural component (2) comprises partial wall reinforcements (5) made of superimposed and molten continuously fiber-reinforced plastic blank parts or other inserts consisting of fiber-reinforced materials.

3. The vehicle body component according to claim 1 or 2, **characterized in that** the structural component (2) and the body shell component (1) are joined by adhesive bonding.

## Revendications

1. Elément de carrosserie consistant en un élément de coque extérieure avec l'arrière duquel est raccordé un élément structurel assurant la rigidité de l'élément,
**caractérisé en ce que**
l'élément structurel (2) consiste en une tôle organique façonnée thermiquement, la tôle organique comportant une platine en plastique thermiquement déformable et renforcée en continu par des fibres, l'élément structurel (2) et l'élément de coque extérieure (1) étant raccordés l'un à l'autre par sertissage ou repliage à rouleaux.

2. Elément de carrosserie selon la revendication 1, **caractérisé en ce que** l'élément structurel (2) comporte des renforcements de paroi (5) composés de parties de platine en plastique superposées et fusionnées et renforcées en continu par des fibres, ou bien d'autres inserts composés de matériaux renforcés par des fibres.

3. Elément de carrosserie selon la revendication 1 ou 2, **caractérisé en ce que** l'élément structurel (2) et l'élément de coque extérieure sont raccordés par collage.
